# EUROPEAN PATENT SPECIFICATION

(11) **EP 1 081 831 B1**
(45) Date of publication and mention of the grant of the patent: **09.04.2003**
(21) Application number: 99830553.6
(22) Date of filing: 06.09.1999
(51) Int. Cl.: H02K 15/00

(54) **Method and apparatus for making a self-locking knot in a stator lacing machine**
Verfahren und Vorrichtung zum Herstellen eines selbstschliessenden Knotens in einer Statorschnürmachine
Procédé et dispositif pour la réalisation d'un noeud se refermant de lui-meme dans une machine de laçage de stators

(43) Date of publication of application: 07.03.2001
(73) Proprietor: Fortuna, Giovanni, 10098 Rivoli (TO) (IT)
(72) Inventor: Fortuna, Giovanni, 10098 Rivoli (TO) (IT)
(74) Representative: Robba, Pierpaolo

(56) References cited:
- US-A- 3 983 826
- US-A- 4 558 894
- US-A- 4 563 962
- US-A- 4 614 161
- PATENT ABSTRACTS OF JAPAN vol. 014, no. 515 (E-1000), 13 November 1990 (1990-11-13) & JP 02 214445 A (SANKO KIKI KK), 27 August 1990 (1990-08-27)
- PATENT ABSTRACTS OF JAPAN vol. 018, no. 687 (E-1651), 26 December 1994 (1994-12-26) & JP 06 276710 A (OGATA SEIKO:KK), 30 September 1994 (1994-09-30)

## Description

The present invention refers to a method and an apparatus for lacing and knotting, by means of a cord, coils or windings of dynamo-electric machines, for example stator coils of electric motors.

More particularly the invention refers to an apparatus and a relative method for automatically making a knot on the end lacing terminal of the cord.

The stators of many dynamo-electric machines, for example motors and electric generators, comprise a toroidal metal core and a plurality of copper or aluminium wire windings, passing through the core, suitable for generating a magnetic field necessary for the operation of the machine. For improving the machine efficiency and for avoiding that a winding wire interfere with the rotor, the windings are generally wrapped, in particular the parts that project out of the core, by means of a cotton or synthetic material cord, for example polyester.

In order to effect the lacing of the stators in an automatic way have been developed suitable automatic lacing stations. For instance the US Patent 3,685,470 describes a machine for the lacing of stators that effects a type of lacing known as "diamond stitch" or "honeycomb." Using this machine however, when the lacing is finished, the operator must manually knot the initial and final terminals of the cord, and this operation affects considerably the production costs and times.

In order to obviate this drawback have been developed knotting stations that provide, when the stator gets out of the lacing station, to knot together the initial and final terminals of the cord. The addition of a station in the production line affects however considerably the costs of the plant, the maintenance costs and increases the probabilities of a machine stop due to failures on the production line.

In the US patent 3,983,826 is disclosed a device that locks the starting lacing terminal of the cord and subsequently effects a knot on the end lacing terminal. The knot made by such device is however a rather complex knot that lengthens considerably the working cycle of each single piece.

The US patent 4,614,161 discloses a device that effects automatically the lacing of a stator coil, using a diamond stitch, and, at the end of the lacing phase, effects a knot on the end terminal of the cord. The effectiveness of the knot is assured by the melting of the cord free end, a cord made of polyester or other polymeric material, which is contemporaneously cut by means of an incandescent wire. Such device has however some drawbacks, the effectiveness of the knot is in fact strongly conditioned by the dimensions of the melted "little ball" formed during the cut, which can vary depending on many main factors (quality of the cord, temperature of the incandescent wire, etc.), moreover, at each cut, it is produced a superfluous cord portion, known as "scrap", which must be immediately removed and which represents an economical and ecological waste.

JP-A 2214445 discloses a device for lacing and knotting a coil of a dynamo-electric machine, in which a knotting loop is formed at the end of the lacing phase: the loop is then cut and the cord end portion is pulled to form the knot that is then squeezed against the coil. The knot is scarcely reliable and is formed by using complex means, different from those employed for the lacing phase.

US patent 4,558,894 discloses a device for tying or lacing a bundle of electrical wires, where the lacing process is stopped upon formation of a predetermined number of cord loops around the bundle, and a number of additional loops is laid In a chain-like formation on one side of the bundle. Once the desired number of additional loops has been laid, the cord is pulled tight to form a knot and is cut to allow starting a new lacing phase. Practical experience has shown that a knot made in such manner is not reliable and becomes readily untied.

A first object of the present invention it is therefore to provide a method and a relative apparatus for effecting automatically both the lacing of a stator coil and the knotting of the end terminal of the cord, obviating to the drawbacks of the prior art devices.

Another object of the present invention it is to provide a lacing apparatus that, at the end of the cycle, effects automatically a self-locking knot on the end terminal of the cord and that it doesn't generate scraps (unwanted cord portions).

These objects of the present invention are obtained by means of a method and a relative automatic lacing/knotting apparatus, as defined in the accompanying claims.

According to the invention the lacing and knotting apparatus comprises an automatic control system that, when the coil lacing operation is terminated, stops the rotation movement of the stator and drives the lacing needle according to a sequence of movements suitable for performing a self-locking knot on the end terminal of the cord.

Thanks to the self-locking knot the lacing and knotting apparatus realised according to the invention shows better economic and simplicity characteristics relative to the known art and allows, thanks to the cord cutting system that doesn't generate scraps, to accelerate the production process and to increase reliability.

The aforesaid objects will result mostly clear from the detailed description of embodiments of the method according to the invention with particular reference to the attached figures in which:
Figure 1 is a perspective view of part of a stator during a conventional diamond stitch lacing process;
Figures 2 and 3 show the final phases of the lacing process;
Figures from 4 to 9 show the phases of a first knot lockup realised according to a first alternative of the method of the present invention;
Figures 10A and 10B show three successive knot lockups realised according to the first alternative of the method of the present invention;
Figures 11 and 12 show the hooking of the cord by means of an harpoon at the end of the knotting phase according to the method of the present invention;
Figure 13 shows the cord cutting phase at the end of the knotting phase realised according to the present invention;
Figure 14 shows the position of the cord before the beginning of a following lacing phase on a new stator coil;
Figure 15 shows an advanced lacing phase on a new stator coil;
Figures 16 to 28 show the phases of a knotting process realised according to a second alternative of the method of the present invention.

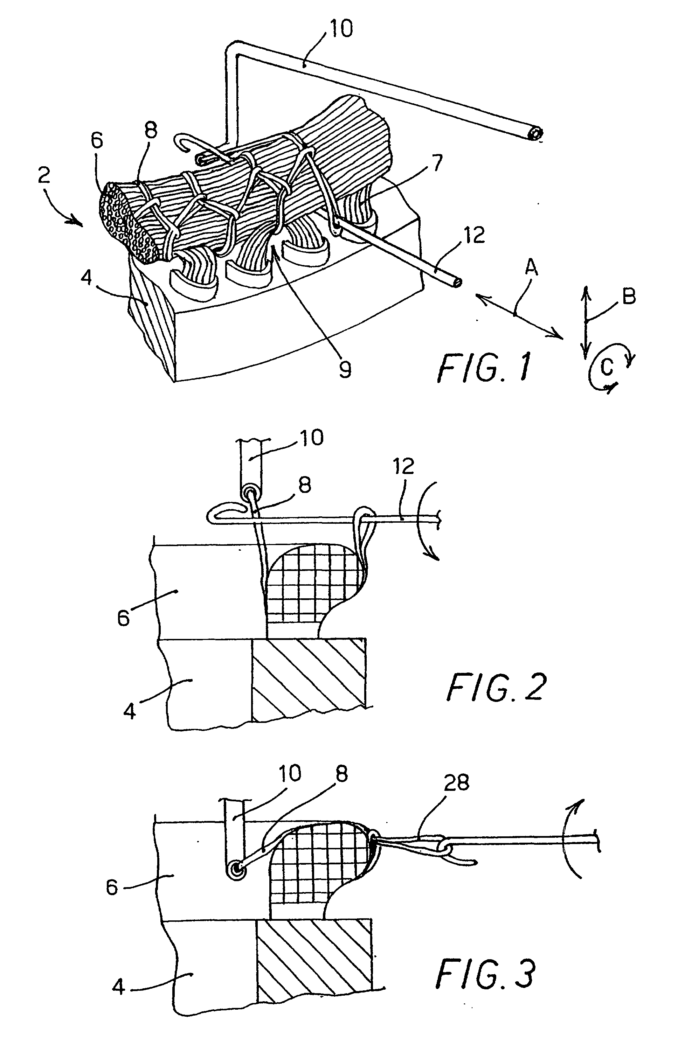

In Figure 1 it is shown part of a stator 2 of a dynamo-electric machine during a diamond-stitch lacing process. Particularly it is visible a toroidal metal core 4 and a copper wire coil 6, having circular shape, disposed over the core 4. Under the core 4 is generally present a second coil, not shown in figure, having shape and characteristics similar to the upper coil. The two coils are connected by means of wires 7 passing through the core 4. Between adjacent groups of wires 7 are present some slots 9 which allow the passage of the needle 12 during the coil lacing phase.

Being the upper and the lower coils very similar in shape and dimension, the automatic lacing machine is able to perform simultaneously, thanks to the symmetrical structure, the lacing of both the coils. Hereinafter will be described, for clearness, the knotting operation of the upper coil only, in that the operations performed by a possible second needle on a lower coil would be identical and perfectly specular.

The stator 2 is initially centred and fixed on a rotating base whose rotation is synchronised with the movements of a needle 12, having a hook-shaped end, and of a thread-guide tube 10. The rotation of the base is performed by angular divisions proportional to the number of slots in the coil (for a stator with 24 slots, for instance, the angle of rotation is equal to 15°).

The needle 12 is mounted on a needle support, not shown in figure, that allows it to effect various movements, a radial forward/backward movement, pointed out in figure by the arrow A, an axial top/bottom movement, pointed out by the arrow B, and rotation movements around its axis clockwise or counterclockwise, see arrow C. The thread-guide tube 10 is mounted on a tube support which moves vertically and which can oscillate sideways to the right and to the left in order to follow the needle movements during the lacing operation. The aforesaid movements, reciprocally synchronised, could be obtained for instance by means of mechanical cam wheel oscillators and/or linkworks operated by a brushless electric motor driven by a dedicated control board.

At every lacing stitch the needle 12 advances with a radial movement into a slot 9, it hooks the cord 8 that comes from the tube 10, it withdraws passing the cord through a previously made lacing ring forming a new lacing ring, it moves upward with an axial movement, it advance again toward the inside of the coil for hooking again the cord and it finally withdraws forming another lacing ring. At this point, while the needle moves downward, the base rotates the stator of a position for allowing the needle to pass into next slot. The interlacing of the lacing rings originates a stitch known as the diamond or honeycomb stitch that winds and tightens the coil.

During the back movements the needle 12 effects a rotation on its own axis of approximately 180 degrees, clockwise when the needle is in the lower position and counterclockwise when it is in the upper position. This expedient allows to release the needle hook extremity from the previously made lacing ring during withdrawing.

When the stator has effected a complete rotation and the lacing phase is terminated, the needle effects a last movement, shown in figure 2, from the inside toward the outside of the stator, effecting contemporaneously a 180 degrees counterclockwise rotation, and starts to descend for reaching an intermediary position shown in figure 3.

Analogously the lacing phase could finish with a movement of the needle 12 from the inside toward the outside effected in the lower position, that is passing into a slot of the stator, returning then the needle in a position equivalent to the position shown in figure 3.

At this point the total kinematic motion of the machine stops, in the position shown in figure 3, with the hook of the needle 12 inserted in a last lacing ring 28, and starts the knotting phase. The lowering of the thread-guide tube 10, which during the lacing always accompanies the vertical movements of the needle 12, contributes to maintain tense the cord in this stopping phase.

The coming out of the cord 8 from the thread-guide tube 10 is controlled moreover by a cord friction and recovery system, not illustrated in figures, that allows, when necessary, to restrain its exit or to withdraw the cord into the thread-guide tube 10.

When the kinematic motion of the machine has halted, it is necessary to separate the synchronism between the rotation of the base, on which the stator 2 is fixed, and the movements of needle 12 and thread-guide tube 10. In this way it is possible to stop the rotation of the base and to control independently the needle movement. Particularly it is separated the rotation movement of the needle 12 from the kinematic motion of the global lacing mechanics. The rotation of the needle, during the knotting phase, is controlled by an additional electric motor suitably controlled.

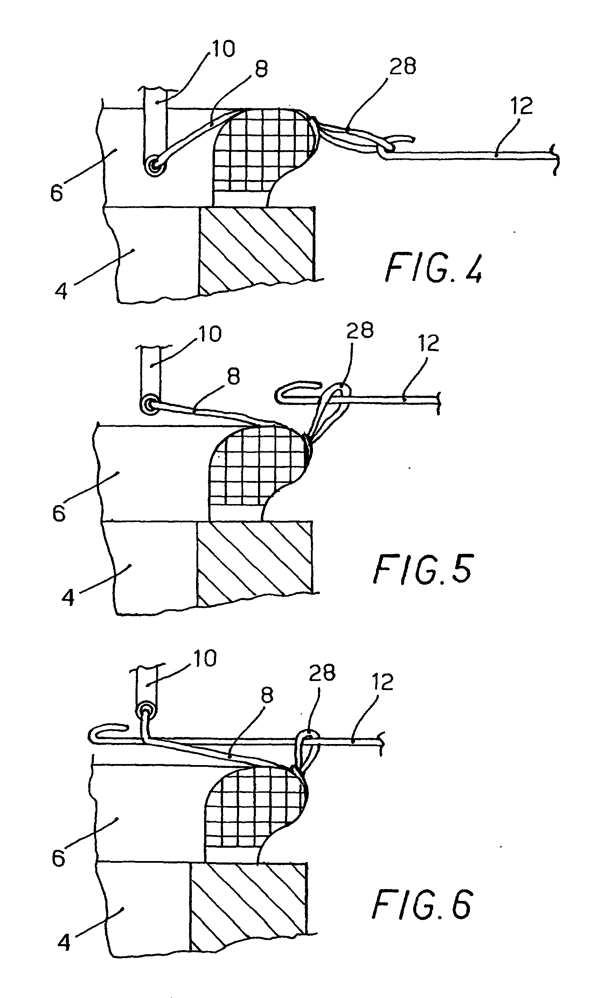

At this point the needle 12 is rotated on its own axis clockwise 180 degrees, turning upwardly the hook extremity and reaching the position shown in figure 4, then the sense of rotation of the kinematic motion of the machine is reversed moving up again the needle 12 and the thread-guide tube 10 and making advance the needle 12 radially toward the inside of the stator, see figure 5, passing in the last lacing ring 28, along a direction opposite to the direction of the last movement made by the needle for finishing the lacing phase.

In this phase intervenes the cord controlled recovery system that provides, withdrawing the exceeding portion of the cord into the thread-guide tube 10, to maintain tense the last lacing ring 28 on the needle 12.

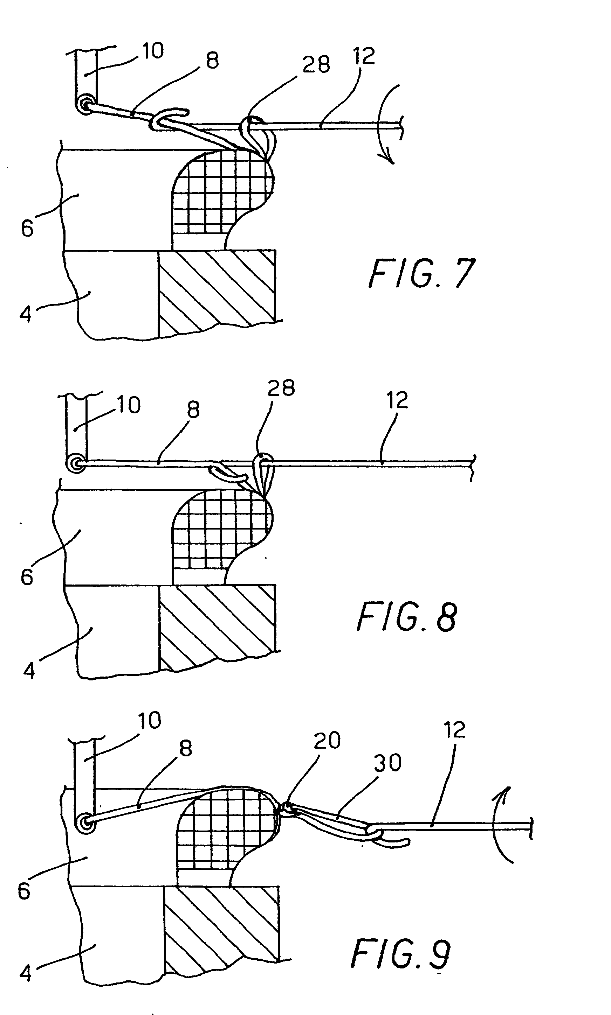

The advancement of the needle 12 towards the inside continues up to go beyond the cord 8 that exits from the thread-guide tube 10, see figure 6, then the needle retires hooking the cord, see figure 7, performs a 180° counterclockwise rotation for not hooking into the ring 28, see figure 8, and pulls the cord 8 into the ring 28 causing its closing and forming a first knotting ring 30, see figure 9.

In this phase the closing of the ring 28 is favoured by the controlled intervention of the friction system that provides for stopping, or however braking, the exit of the cord 8 from the thread-guide tube 10.

The lacing ring 28 therefore has been closed on the cord ring 30 forming a first knot lockup 20. The needle 12 and the thread-guide tube 10 are returned in the initial knotting position previously shown in figure 3.

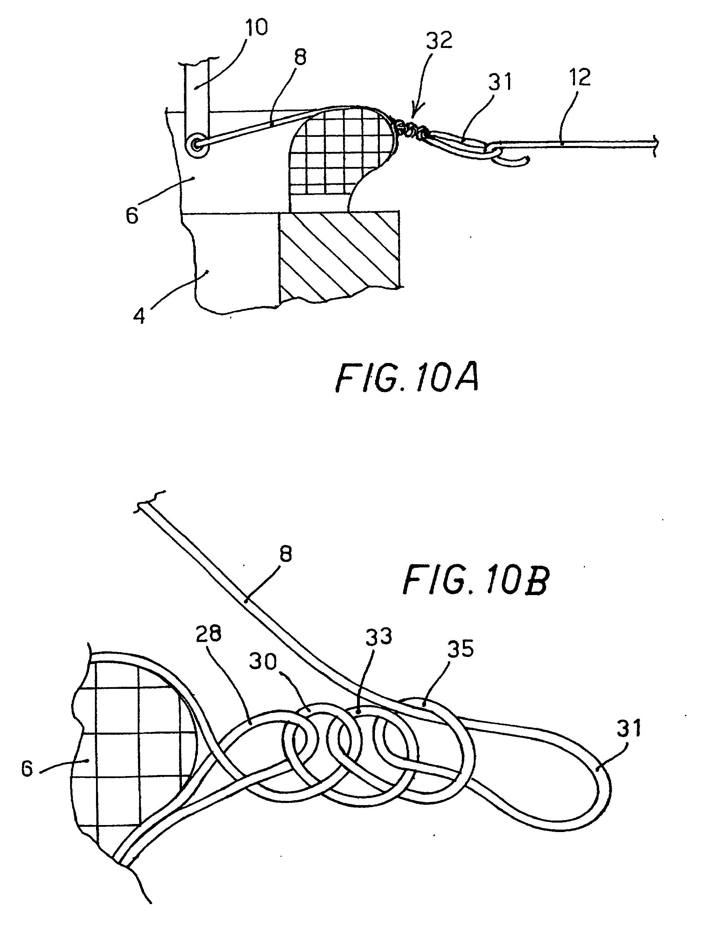

Operating the kinematic motion in reverse sense it is therefore possible to repeat the phases above described, and illustrated in figures 3 to 9, in order to form a second knot lockup and, subsequently, a third knot lockup, getting a chain of knots 32 shown in figures 10A and 10B. Experimentally it has been verified that the realisation of three knot lockups represents an excellent compromise between knotting time and final characteristics. However it is possible realize, using the same technique, a chain composed by only two knot lockups or by a desired higher number of knot lockups.

Figure 10A shows therefore the terminal phase of the realisation of the last knot lockup, in this case the third, wherein the hook of the needle 12 is inserted in a last cord ring 31.

In Figure 10B it is shown schematically, in an open configuration, the chain, realised by means of the three knot lockups above described, formed by linkage of the last lacing ring 28 and the three following knotting rings 30, 33 and 35.

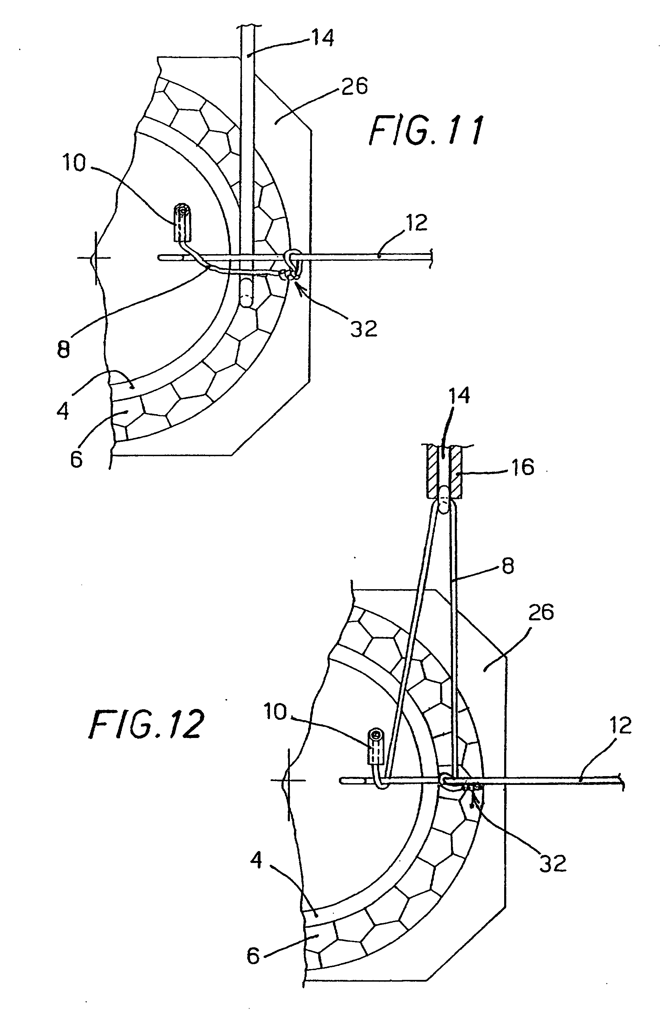

Once effected the last knot lockup, the needle 12 is rotated 180° clockwise, the sense of the kinematic motion is again reversed, the needle 12 is passed into the ring 31 and moved to the position of total advancing, shown in Figure 11. Subsequently a harpoon 14, coming from a side direction substantially perpendicular to the needle 12, passes under the needle and, once hooked the cord 8, retires withdrawing the cord and locking it contemporaneously by means of a lock 16, as visible in Figure 12, for preparing the cord to the cutting phase.

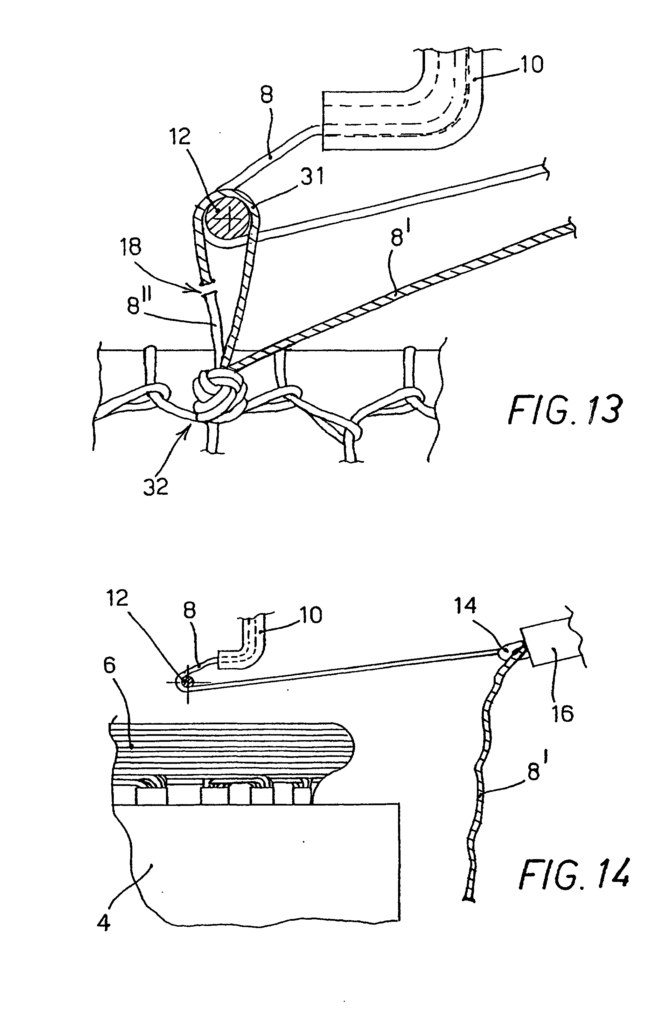

Figure 13 shows in detail the cutting phase of the cord 8 that finishes the knotting operation. The cord ring 31, passing around the needle 12, is tensioned by the harpoon 14 in combination with the lock 16. By means of a sharp blade or an other cutting system, as for instance a wire made incandescent by the passage of electric current, it is possible to intervene sideways cutting, in the point 18, only one of the two half rings of cord tensioned between the knot 32 and the needle 12. Drawing the cord 8 by means of the harpoon 14 it is therefore possible to extract the cord from the knot 32, releasing the extremity 8'. Only a short cord portion 8'' remains attached to the self-locking knot 32.

Advantageously, if a rotating table, suitable for holding contemporaneously two stators, is used, once finished the knotting operation on one stator and cut the cord as described above, the rotation of the table itself provides for drawing the cord portion 8' from the knot 32, as shown in Figure 14, without the need of another intervention of the harpoon 14.

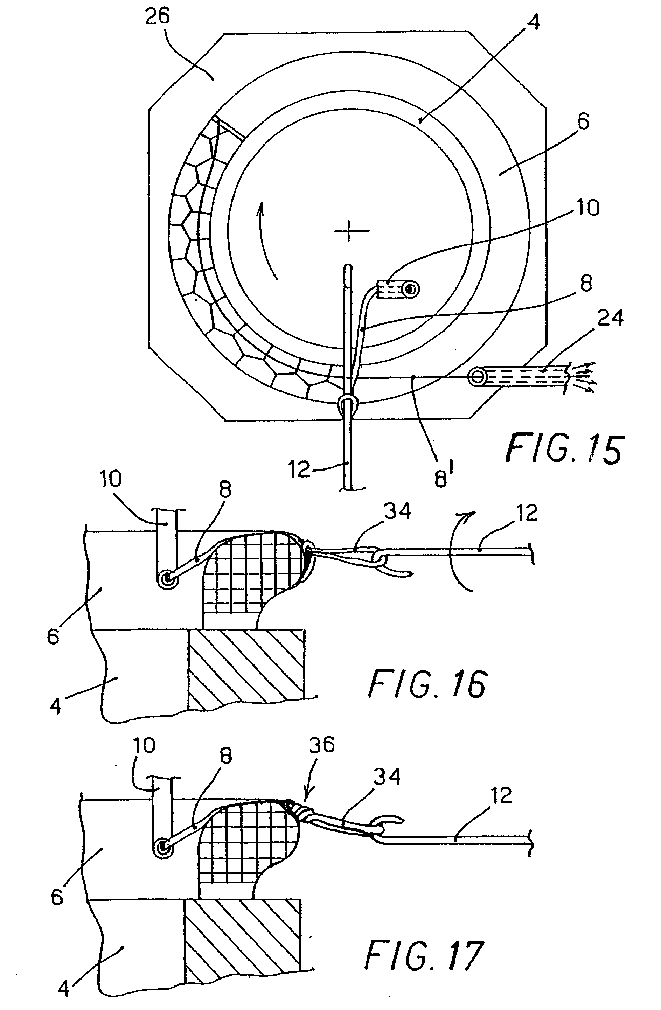

The free cord extremity 8' can be sucked by a vacuum pipe 24, placed perpendicularly to the needle 12, shown in Figure 15, wherein it is shown a new lacing operation, in an advanced phase, on another stator coil. As it is clearly visible in Figure 15, the free cord portion 8' is automatically locked under the lacing, getting out of the vacuum pipe 24 as the stator is rotated clockwise.

The realisation of this knot therefore doesn't generates scrap, or isolated cord portions, that otherwise should be immediately removed for not interfering with the mechanical moving parts of the machine itself.

In Figures 16 to 28 it is illustrated a second embodiment of the knotting method realised according to the present invention.

Figure 16 shows the position of the needle 12 and of the thread-guide tube 10 when, terminated the lacing phase, the total kinematic motion of the machine stops for beginning the knotting phase. The configuration shown in Figure 16 is equal to the starting configuration, previously shown in Figure 3, of the first embodiment.

The hook of the needle 12, turned downwardly, is inserted in a last lacing ring 34, the needle 12 and the thread-guide tube 10 are slightly lowered and they maintain tensioned the cord 8.

The coming out of the cord 8 from the thread-guide tube 10 is controlled moreover by a cord friction and recovery system, not illustrated in Figures, that allows, when necessary, to restrain its exit or to withdraw the cord into the thread-guide tube 10.

When the kinematic motion of the machine has halted, it is necessary to separate the synchronism between the rotation of the base, on which the stator 2 is fixed, and the movements of needle 12 and thread-guide tube 10, so that it is possible to stop the rotation of the base and to control independently the needle movement. Particularly it is separated the rotation movement of the needle 12 from the kinematic motion of the global lacing mechanics. The rotation of the needle, during the knotting phase, is controlled by an additional electric motor suitably controlled.

Next phase, shown in Figure 17, provides for the rotation of the needle 12 on its own axis of about 540 degrees clockwise in order to twist the lacing ring 34, generating a torsion 36 in the cord, and turning up the hook extremity.

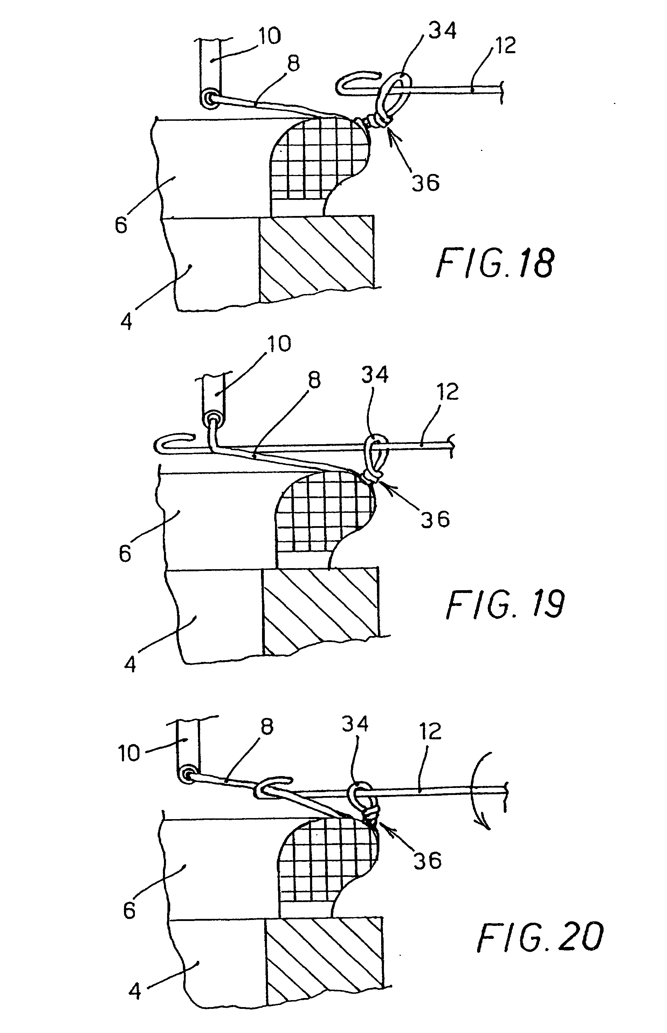

Successively the sense of rotation of the kinematic motion of the machine is reversed, moving up the needle 12 and the thread-guide tube 10 and making advance the needle 12 radially toward the inside of the stator, see Figure 18, passing in the twisted lacing ring 34, along a direction opposite to the direction of the last movement made by the needle for finishing the lacing phase, in this case passing over the coil 6.

In this phase intervenes the cord controlled recovery system that provides, withdrawing the exceeding portion of the cord into the thread-guide tube 10, to maintain tense the twisted lacing ring 34 on the needle 12.

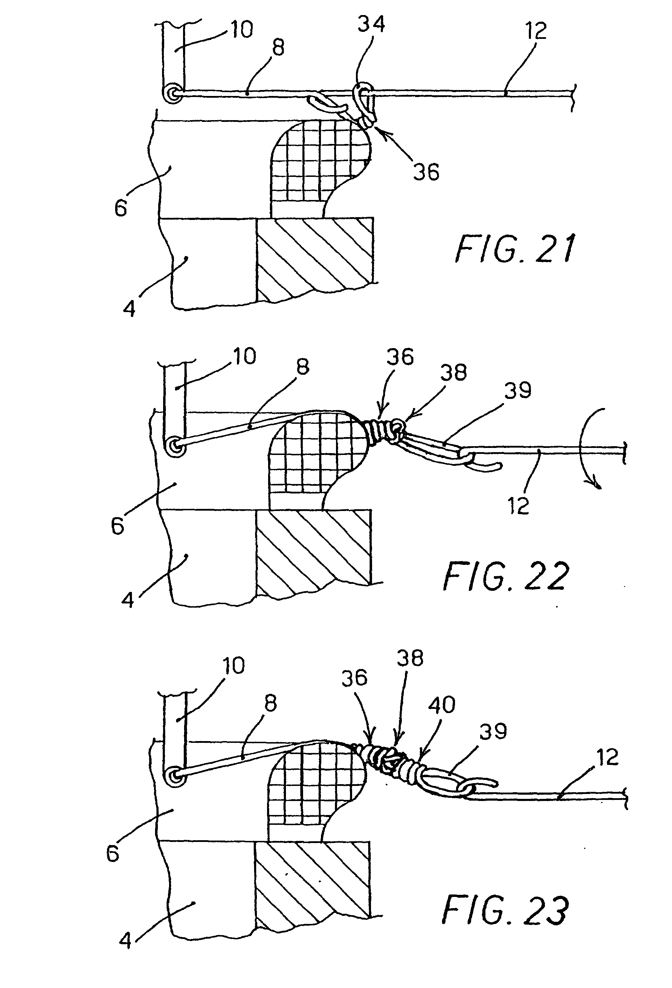

The advancement of the needle 12 towards the inside continues up to go beyond the cord 8 that exits from the thread-guide tube 10, see Figure 19, then the needle retires hooking the cord, see Figure 20, performs a 180° counterclockwise rotation for passing, easily into the twisted ring 34, see Figure 21, and pulls the cord 8 into the twisted ring 34 causing its closing and forming a first knot lockup 38 and a first knotting ring 39.

In this phase the closing of the twisted ring 34 is favoured by the controlled intervention of the friction system that provides for stopping, or however braking, the exit of the cord 8 from the thread-guide tube 10.

The twisted lacing ring 34 therefore has been closed on the cord ring 39, or knotting ring, forming a first knot lockup 38, as shown in Figure 22. The needle 12 and the thread-guide tube 10 are returned in a position equivalent to the initial knotting position previously shown in Figure 16.

Next phase, shown in Figure 23, provides for the rotation of the needle 12 on its own axis of about 540 degrees counterclockwise in order to twist the lacing ring 39, generating a second torsion 40 in the cord, and turn up the hook extremity.

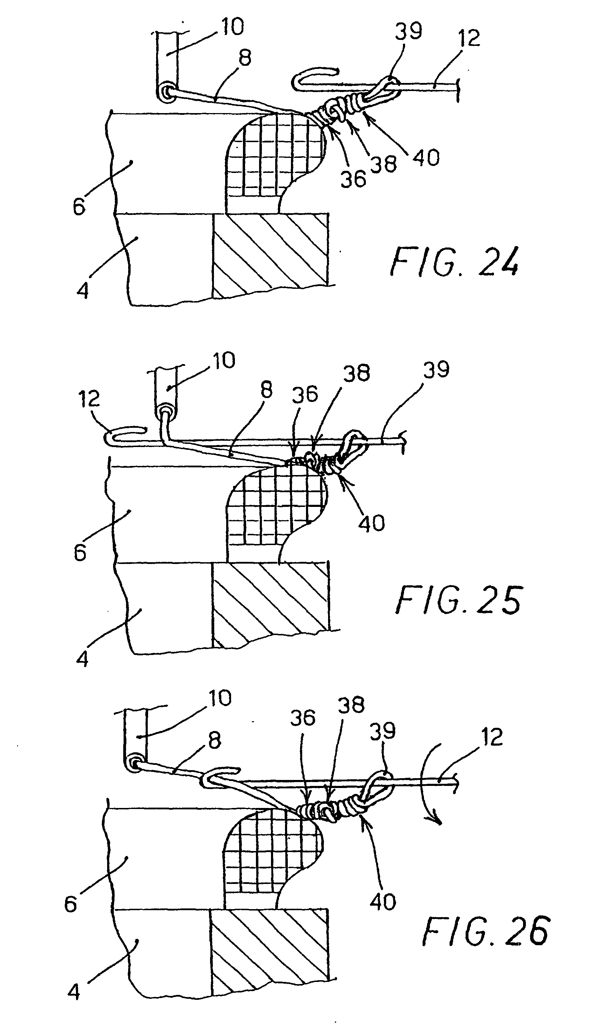

Reversing now the kinematic motion of the machine, the needle 12 and the thread-guide tube 10 are raised, and then the needle 12 moves radially toward the inside of the stator, see Figure 24, passing in the twisted lacing ring 39.

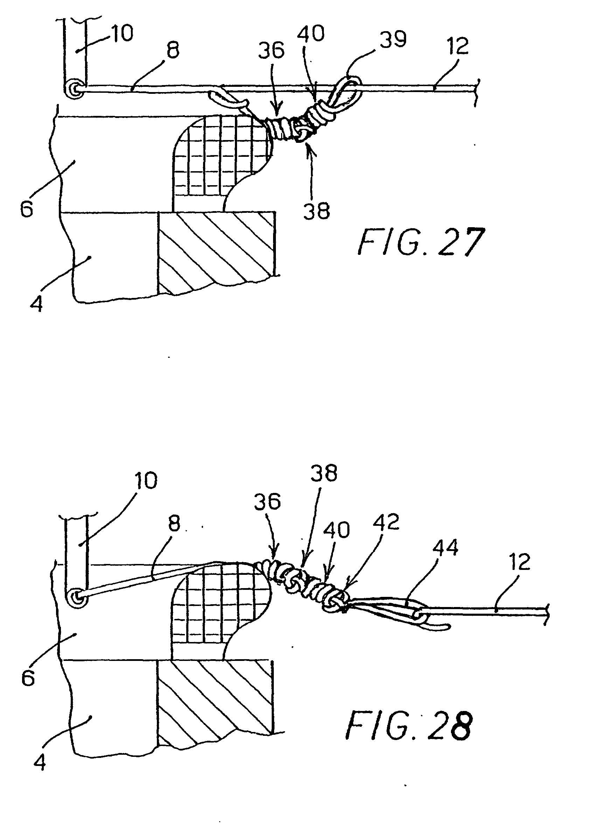

The advancement of the needle 12 towards the inside continues up to go beyond the cord 8 that exits from the thread-guide tube 10, see Figure 25, then the needle retires hooking the cord, see Figure 26, performs a 180° counterclockwise rotation for not hooking into the twisted ring 39, see Figure 27, and pulls the cord 8 into the twisted ring 39 causing its closing and forming a second knot lockup 42 and a last knotting ring 44.

Figure 28 shows, schematically, the succession of the first torsion 36, the first knot lockup 38, the second torsion 40 and the second knot lockup 42. In the real knot the sequence of these operations generates a small chain in which it is difficulty to distinguish the twists and the knot lockups.

The torsion preceding each knot lockup contributes considerably to increase the tightness of the knot, allowing to realize, by means of only two knot lockups, a perfect self-locking knot.

Experimentally it has been verified that the realisation of two twisted knot lockups represents an excellent compromise between knotting time and final tightness characteristics. However it is possible realize, using the same technique, a chain composed by only one twisted knot lockup, if a high tightness is not requested, or by a higher number of twisted knot lockups.

The direction of the 540° rotations performed by the needle 12 for realising the first and the second twists in the cord is not a critical parameter for the realisation of the knot. Said twists in fact can be realised indifferently clockwise or counterclockwise, in opposite directions or in the same direction. Moreover each rotation, which preferably is of 540°, equal to a one and a half turn of the needle, could be for instance of 900°, equal to two turns and half, or of any desired value greater than 180°.

For terminating the realisation of the twisted self-locking knot the method provides, as previously illustrated in Figures 11 to 15 of the first embodiment, for the capture of the cord 8 by means of a harpoon 14, the cut of the last knotting ring obtained and for the subsequent withdrawing of the cord 8 from the knot.

## Claims

1. Method of knotting an end lacing terminal of a cord (8) used for wrapping a generally toroidal coil (6) of a dynamo-electric machine, by means of a lacing apparatus of the type comprising cord supply means (10), a lacing needle (12) having a hook-shaped extremity and capable of rotating around its axis (C) as well as of moving radially (A) and axially (B) relatively to said coil (6) for engaging said cord (8) and pulling it radially in order to form interlaced lacing rings wrapping said coil (6), and means for rotating said coil (6) around its axis in synchronism with the movements of said needle (12), the method comprising the steps of:
- forming, upon completion of a lacing phase, a plurality of linked knotting rings (30, 33, 35, 31; 39, 44) on said end lacing terminal, by making the cord pass each time through a previously formed knotting ring (30, 33, 35; 39) or through a last-formed lacing ring (28; 34), respectively, when a first knotting ring (30; 39) is being formed; and
- cutting the last knotting ring (31; 44) of said plurality;
and being **characterised in that**, during the formation of each knotting ring (30, 33, 35; 39, 44), the cord (8) is pulled to such an extent that said last-formed lacing ring (28; 34) and respectively each knotting ring (30, 33, 35; 39) preceding a last knotting ring (31; 44) are individually closed on the knotting ring (30, 33, 35, 31; 39, 44) being formed, whereby a chain of knot lockups (20; 38, 42) forming a self-locking knot (32) is obtained, the last knotting ring being cut at a position (18) adjacent to the knot (32).

2. Method according to claim 1, wherein said knotting rings (30, 33, 35, 31) are formed through the steps of:
a1) once finished the lacing phase by means of a last radial movement of the needle (12) from the inside of the coil (6) toward the outside to form said last lacing ring (28), separating the synchronism between the rotation movement of the coil and the movement of the needle and stopping the rotation of said coil;
b1) driving the needle (12) in a first radial movement toward the inside of the coil (6), along a path equivalent to a needle path during said last radial movement, but in opposite direction;
c1 hooking the cord (8), supplied by said cord supplying means (10), by means of the hook-shaped extremity of said needle (12);
d1) driving the needle (12) with the cord (8) engaged in its hook-shaped extremity in a first radial movement toward the outside of the coil (6), along a path equivalent to the needle path during said first radial movement toward the inside, but in opposite direction, pulling the cord (8) into said last lacing ring (28), causing its closing into a first knot lockup (20) and forming the first knotting ring (30);
e1) driving the needle (12) in a second radial movement toward the inside of the coil, along a path equivalent to the needle path during said last radial movement, but in opposite direction;
f1) hooking the cord (8), supplied by said cord supplying means (10), by means of the hook-shaped extremity of said needle (12);
g1) driving the needle (12), with the cord (8) engaged in its hook-shaped extremity, in a second radial movement toward the outside of the coil, along a path equivalent to the needle path during said second radial movement toward the inside, but in opposite direction, pulling the cord (8) into said first knotting ring (30), causing its closing into a second knot lockup and forming a second knotting ring;
h1) executing a cut (18) in the last knotting ring and pulling the cord for extracting the free extremity (8'), obtaining consequently a self-locking knot (32).

3. Method according to claim 2, wherein, before executing the cut in said second knotting ring, the following steps are accomplished:
i1) driving the needle (12) in a third radial movement toward the inside of the coil, along a path equivalent to the needle path during said last radial movement, but in opposite direction;
j1) hooking the cord (8), supplied by said cord supplying means (10), by means of the hook-shaped extremity of said needle (12);
k1) driving the needle (12), with the cord (8) engaged in its hook-shaped extremity, in a third radial movement toward the outside of the coil, along a path equivalent to the needle path during said third radial movement toward the inside, but in opposite direction, pulling the cord (8) into said second knotting ring, causing its closing into a third knot lockup and forming a third knotting ring.

4. Method according to claim 2, wherein, before executing the cut in said second knotting ring, steps e1), f1) and g1) are repeatedly iterated in order to form a chain having a desired length.

5. Method according to any of claims 2 to 4, wherein the needle (12), after having hooked the cord (8), performs a rotation of about 180° around its axis, during the radial movement toward the outside of the coil, turning downwards its hook-shaped extremity.

6. Method according to claim 5, wherein the needle (12), after having done a radial movement toward the outside of the coil, performs a rotation of about 180° around its axis turning up again its hook-shaped extremity.

7. Method according to claim 5, wherein the needle (12), after having done a radial movement toward the outside of the coil, effects a first axial movement downwards, a rotation of about 180° around its axis, turning up again its hook-shaped extremity, and a second axial movement upwards in a direction opposite to said first axial movement.

8. Method according to claim 1, wherein said knotting rings (39, 44) are formed through the steps of:
a2) once finished the lacing phase by means of a last radial movement of the needle (12) from the inside of the coil (6) toward the outside to form said last lacing ring (34), separating the synchronism between the rotation movement of the coil and the movement of the needle and stopping the rotation of said coil;
b2) driving the needle (12) in a first rotation around its own axis, to form a first torsion (36) in said last lacing ring (34) and obtain a twisted last lacing ring (34);
c2) driving the needle (12) in a first radial movement toward the inside of the coil (6), along a path equivalent to the needle path during said last radial movement, but in opposite direction;
d2) hooking the cord (8), supplied by said cord supplying means (10), by means of the hook-shaped extremity of said needle (12);
e2) driving the needle (12), with the cord (8) engaged in its hook-shaped extremity, in a first radial movement toward the outside of the coil (6), along a path equivalent to the needle path during said first radial movement toward the inside, but in opposite direction, pulling the cord (8) into said twisted last lacing ring (34), causing its closing into a first knot lockup (38) and forming a first knotting ring (39);
f2) executing a cut (18) in the last knotting ring and pulling the cord for extracting the free extremity (8'), obtaining consequently a self-locking knot.

9. Method according to claim 8, wherein, before executing the cut in the last knotting ring, the following steps are accomplished:
g2) driving the needle (12) in a second rotation around its own axis to form a second torsion (40) in said first knotting ring (39) and obtain a first twisted knotting ring (39);
h2) driving the needle (12) in a second radial movement toward the inside of the coil, along a path equivalent to the needle path during said last radial movement but in opposite direction;
i2) hooking the cord (8), supplied by said cord supplying means (10), by means of the hook-shaped extremity of said needle (12);
j2) driving the needle (12), with the cord (8) engaged in its hook-shaped extremity, in a third radial movement toward the outside of the coil, along a path equivalent to the needle path during said second radial movement toward the inside, but in opposite direction, pulling the cord (8) into said first twisted knotting ring (39), causing its closing into a second knot lockup (42) and forming a second knotting ring (44).

10. Method according to claim 9, wherein said first rotation is performed in a direction opposite to the direction of said second rotation.

11. Method according to claim 9, wherein said first and said second rotations are rotations of about 540°.

12. Method according to claim 8, wherein, before executing the cut in the last knotting ring, steps b2), c2), d2) and e2) are repeatedly iterated, in order to form a twisted ring chain having a desired length.

13. Method according to any of the claims 8 to 12, wherein the needle (12), after having done one of said radial movements toward the outside of the coil, effects a first axial movement downwards and, after a rotation around its axis, effects a second axial movement upwards moving in the upper position.

14. Method according to any of the claims 2 to 13, wherein, before executing the cut in the last knotting ring, the following steps are accomplished:
l) driving the needle (12) in a first radial movement toward the inside of the coil passing through the last knotting ring;
m) hooking the cord (8) by means of a harpoon (14) that comes from a side direction substantially perpendicular to said needle (12), passes under the needle (12) and, once hooked the cord (8), is retracted while locking the cord by means of a lock (16).

15. Method according to claim 14, wherein, when the cut (18) in the last knotting ring has been performed, said coil (6) is moved and replaced by a new coil to be laced, and the cord (8), locked by the harpoon (14) by means of the lock (16), is automatically pulled and withdrawn from the self-locking knot.

16. Method according to any of the claims 2 to 13, wherein said cut (18) in the last knotting ring is performed by means of a wire made incandescent by the passage of electric current.

17. Method according to any of the claims 2 to 13, wherein, in the steps in which the needle (12) is driven in a radial movement toward the inside of the coil, cord recovery means in said supply means (10) are made to intervene for maintaining tight the cord (8) on the needle (12), and, in the steps in which the needle (12) is driven in a radial movement toward the outside of the coil, cord braking means are made to intervene to limit the cord delivery from said supply means (10).

18. Apparatus for automatically lacing and knotting, by means of a cord (8), a generally toroidal coil (6) of a dynamo-electric machine, said apparatus comprising cord supply means (10), means for driving a lacing needle (12) having a hook-shaped extremity, said driving means being capable of rotating said needle around its own axis (C) and of moving it radially (A) and axially (B) relatively to said coil (6) for engaging said cord (8) and pulling it radially in order to form interlaced lacing rings wrapping said coil (6), means for cutting the cord after its knotting, and means for rotating said coil around its axis in synchronism with the movement of said needle (12), said needle driving means being operable, upon completion of a lacing phase, to form a plurality of knotting rings (30, 33, 35, 31; 39, 44) on said end lacing terminal, by making the cord pass each time through a previously formed knotting ring (30, 33, 35; 39) or through a last-formed lacing ring (28; 34), respectively, when a first knotting ring (30; 39) is being formed, **characterised in that** said needle driving means are arranged to pull the cord (8), during the formation of each knotting ring (30, 33, 35; 39, 44), to such an extent that said last-formed lacing ring (28; 34) and respectively each knotting ring (30, 33, 35; 39) preceding a last knotting ring (31; 44) are individually closed on the knotting ring (30, 33, 35, 31; 39, 44) being formed, whereby a chain of knot lockups (20; 38, 42) forming a self-locking knot (32) is obtained, and **in that** the cutting means are arranged to cut the last knotting ring (31; 44) at a position adjacent to the knot (32).

## Patentansprüche

1. Verfahren zum Verknoten des Fädelendstücks einer Schnur (8) zum Umwickeln einer im Allgemeinen ringförmigen Spule (6) einer dynamoelektrischen Maschine mittels eines Fädelapparats dergestalt, dass er ein Schnurzuführmittel (10), eine Fädelnadel (12), die einen hakenförmigen Vorsprung aufweist und sich sowohl um ihre Achse (C) drehen kann als auch sich im Verhältnis zur genannten Spule (6) radial (A) und axial (B) bewegen kann, um diese Schnur (8) in Eingriff zu nehmen und sie radial zu ziehen, um verflochtene Fädelschlaufen zu bilden, die diese Spule (6) umwickeln, und Mittel zum Drehen dieser Spule (6) um ihre eigene Achse in Abstimmung mit den Bewegungen der Nadel (12) aufweist, wobei dieses Verfahren die folgenden Schritte aufweist:
- nach dem Abschluss der Fädelphase, Bildung einer Vielzahl von verknüpften Knotenschlaufen (30, 33, 35, 31; 39, 44) an diesem Fädelendstück, indem die Schnur jedes Mal durch eine zuvor gebildete Knotenschlaufe (30, 33, 35; 39) bzw. die zuletzt gebildete Fädelschlaufe (28; 34) hindurchgeht, wenn eine erste Knotenschlaufe (30; 39) gebildet wird; und
- Abschneiden der letzten Knotenschlaufe (31; 44) von der genannten Vielzahl;
und **dadurch gekennzeichnet ist, dass** bei der Bildung einer jeden Knotenschlaufe (30, 33, 35; 39, 44) die Schnur (8) so fest angezogen wird, dass die erwähnte zuletzt gebildete Fädelschlaufe (28; 34) bzw. jede Knotenschlaufe (30, 33, 35; 39), die der letzten Knotenschlaufe (31; 44) vorausgeht, einzeln an der gebildeten Knotenschlaufe (30, 33, 35, 31; 39, 44) zugezogen wird, wodurch ein aus einer Kette von Verknotungen (20; 38, 42) gebildeter, sich selbst festziehender Knoten (32) erzielt wird, und die letzte Knotenschlaufe an einer Stelle (18) nahe dem Knoten (32) abgeschnitten wird.

2. Verfahren nach Anspruch 1, in dem diese Knotenschlaufen (30, 33, 35, 31) durch die folgenden Schritte gebildet werden:
a1) nach Abschluss der Fädelphase mittels der letzten radialen Bewegung der Nadel (12) von der Innenseite der Spule (6) zur Außenseite der Spule hin, um die letzte Fädelschlaufe (28) zu bilden, Lösen der Synchronisierung der Drehbewegung der Spule von der Bewegung der Nadel und Beendigung der Spulendrehung;
b1) Führen der Nadel (12) in einer ersten radialen Bewegung zur Innenseite (6) der Spule, analog des Weges, der der letzten von der Nadel zurückgelegten radialen Bewegung entspricht, allerdings in umgekehrter Richtung;
c1) Einhaken der Schnur (8), die durch das Schnurzuführmittel (10) bereitgestellt wird, mittels des hakenförmigen Vorsprungs dieser Nadel (12);
d1) Führen der Nadel (12) mit der Schnur (8), die durch den hakenförmigen Vorsprung in Eingriff genommen ist, in einer ersten radialen Bewegung zur Außenseite der Spule (6) hin, analog des Weges, der der ersten von der Nadel zurückgelegten radialen Bewegung entspricht, allerdings in umgekehrter Richtung, dabei Ziehen der Schnur (8) in diese letzte Fädelschlaufe (28), wodurch sie zu einer ersten Verknotung (20) zugezogen wird und die erste Knotenschlaufe (30) bildet;
e1) Führen der Nadel (12) in einer zweiten radialen Bewegung durch die Innenseite der Spule analog eines Weges, der der letzten von der Nadel zurückgelegten radialen Bewegung entspricht, allerdings in umgekehrter Richtung;
f1) Einhaken der Schnur (8), die vom Schnurzuführmittel (10) bereitgestellt wird, mittels des hakenförmigen Vorsprungs dieser Nadel (12);
g1) Führen der Nadel (12) mit der vom hakenförmigen Vorsprung in Eingriff genommenen Schnur (8) in einer zweiten radialen Bewegung zur Außenseite der Spule hin, die dem Weg entspricht, den die Nadel bei der zweiten radialen Bewegung zur Innenseite hin vollführt hat, allerdings in umgekehrter Richtung, dabei Ziehen der Schnur (8) in diese erste Knotenschlaufe (30), wodurch diese zu einer zweiten Verknotung zugezogen wird und eine zweite Knotenschlaufe bildet;
h1) Durchführung eines Schnitts (18) in die letzte Knotenschlaufe und Ziehen der Schnur zum Herausziehen des freien Vorsprungs (8'), wodurch man einen selbst-festziehenden Knoten (32) erhält.

3. Verfahren nach Anspruch 2, in dem vor der Ausführung des Schnitts in diese zweite Knotenschlaufe die folgenden Schritte ausgeführt werden:
i1) Führen der Nadel (12) in einer dritten radialen Bewegung zur Innenseite der Spule hin entlang eines Weges, der der letzten von der Nadel zurückgelegten radialen Bewegung entspricht, allerdings in umgekehrter Richtung;
j1) Einhaken der Schnur (8), die vom Schnurzuführmittel (10) bereitgestellt wird, mittels des hakenförmigen Vorsprungs dieser Nadel (12);
k1) Führen der Nadel (12) mit der vom hakenförmigen Vorsprung in Eingriff genommenen Schnur (8) in einer dritten radialen Bewegung zur Außenseite der Spule hin entlang des Weges, der dem von der Nadel bei der dritten radialen Bewegung zur Innenseite hin zurückgelegten entspricht, allerdings in umgekehrter Richtung, dabei Ziehen der Schnur (8) in diese zweite Knotenschlaufe (30), wodurch diese zu einer dritten Verknotung zugezogen wird und eine dritte Knotenschlaufe bildet.

4. Verfahren nach Anspruch 2, in dem vor der Ausführung des Schnitts in diese zweite Knotenschlaufe die Schritte e1), f1) und g1) wiederholt ausgeführt werden, um eine Kette von gewünschter Länge zu bilden.

5. Verfahren nach einem der Ansprüche 2 bis 4, in dem die Nadel (12), nachdem sie die Schnur (8) eingehakt hat, gleichzeitig mit der radialen Bewegung zur Außenseite der Spule hin eine Drehung um etwa 180° um ihre Achse ausführt und dabei ihren hakenförmigen Vorsprung nach unten dreht.

6. Verfahren nach Anspruch 5, in dem die Nadel (12), nachdem sie eine radiale Bewegung zur Außenseite der Spule hin vollführt hat, eine Drehung um ihre Achse um etwa 180° ausführt und dabei ihren hakenförmigen Vorsprung wieder nach oben dreht.

7. Verfahren nach Anspruch 5, in dem die Nadel (12), nachdem sie eine radiale Bewegung zur Außenseite der Spule hin vollführt hat, eine erste axiale Bewegung nach unten, eine Drehung um etwa 180° um ihre Achse, dabei den hakenförmigen Vorsprung wieder nach oben dreht und eine zweite axiale Bewegung nach oben in einer entgegengesetzten Richtung zur ersten axialen Bewegung bewirkt.

8. Verfahren nach Anspruch 1, in dem diese Knotenschlaufen (39, 44) durch die folgenden Schritte gebildet werden:
a2) nach Abschluss der Fädelphase durch die letzte radiale Bewegung der Nadel (12) von der Innenseite der Spule (6) zur Außenseite der Spule hin zur Bildung der letzten Fädelschlaufe (34), Lösen der Synchronisierung der Drehbewegung der Spule von der Bewegung der Nadel und Beendigung der Drehung dieser Spule;
b2) Führen der Nadel (12) in einer ersten Drehung um ihre eigene Achse, um eine erste Torsion (36) in dieser letzten Fädelschlaufe (34) zu bilden und eine gezwirbelte letzte Fädelschlaufe (34) zu erhalten;
c2) Führen der Nadel (12) in einer ersten radialen Bewegung zur Innenseite der Spule (6) hin entlang eines Weges, der der letzten von der Nadel zurückgelegten radialen Bewegung entspricht, allerdings in umgekehrter Richtung;
d2) Einhaken der Schnur (8), die vom Schnurzuführmittel (10) bereitgestellt wird, mittels des hakenförmigen Vorsprungs dieser Nadel (12);
e2) Führen der Nadel (12) mit der vom hakenförmigen Vorsprung in Eingriff genommenen Schnur (8) in einer ersten radialen Bewegung zur Außenseite der Spule (6) hin, entlang des Weges, der der letzten von der Nadel zurückgelegten radialen Bewegung entspricht, allerdings in umgekehrter Richtung, dabei Ziehen der Schnur (8) in diese letzte gezwirbelte Fädelschlaufe (34), wodurch sie zu einer ersten Verknotung (38) zugezogen wird und eine erste Knotenschlaufe (39) bildet;
f2) Durchführen eines Schnitts (18) in die letzte Knotenschlaufe und Ziehen an der Schnur zum Herausziehen des freien Vorsprungs (8'), wodurch ein selbst-festziehender Knoten (32) erzielt wird.

9. Verfahren nach Anspruch 8, in dem vor der Durchführung des Schnitts in die letzte Knotenschlaufe die folgenden Schritte ausgeführt werden:
g2) Führen der Nadel (12) in einer zweiten Drehung um ihre eigene Achse, um eine zweite Torsion (40) in dieser ersten Knotenschlaufe (39) zu bilden und eine erste verdrehte Knotenschlaufe (39) zu erhalten;
h2) Führen der Nadel (12) in einer zweiten radialen Bewegung zur Innenseite der Spule hin entlang eines Weges, der der letzten von der Nadel zurückgelegten radialen Bewegung entspricht, allerdings in umgekehrter Richtung;
i2) Einhaken der Schnur (8), die vom Schnurzuführmittel (10) bereitgestellt wird, mittels des hakenförmigen Vorsprungs dieser Nadel (12);
j2) Führen der Nadel (12) mit der vom hakenförmigen Vorsprung in Eingriff genommenen Schnur (8) in einer dritten radialen Bewegung zur Außenseite der Spule hin entlang des Weges, der der zweiten von der Nadel zurückgelegten radialen Bewegung entspricht, allerdings in umgekehrter Richtung, dabei Ziehen der Schnur (8) in diese erste gezwirbelte Knotenschlaufe (39), wodurch sie zu einer zweiten Verknotung (42) zugezogen wird und eine zweite Knotenschlaufe (44) bildet.

10. Verfahren nach Anspruch 9, in dem diese erste Drehung in umgekehrter Richtung zur Richtung dieser zweiten Drehung vollführt wird.

11. Verfahren nach Anspruch 9, in dem diese erste und zweite Drehung Drehungen um etwa 540° darstellen.

12. Verfahren nach Anspruch 8, in dem vor der Ausführung des Schnitts in der letzten Knotenschlaufe die Schritte b2), c2), d2) und e2) wiederholt ausgeführt werden, um eine gezwirbelte Schlaufenkette von gewünschter Länge zu bilden.

13. Verfahren nach einem der Ansprüche 8 bis 12, in dem die Nadel (12) nach der Ausführung dieser radialen Bewegungen zur Außenseite der Spule hin eine erste axiale Bewegung nach unten ausführt und, nach einer Drehung um ihre Achse, eine zweite axiale Bewegung nach oben ausführt, die sie in die obere Position bewegt.

14. Verfahren nach einem der Ansprüche 2 bis 13, in dem vor der Ausführung des Schnitts in die letzte Knotenschlaufe die folgenden Schritte ausgeführt werden:
l) Führen der Nadel (12) in einer ersten radialen Bewegung durch die letzte Knotenschlaufe hindurch zur Innenseite der Spule hin;
m) Einhaken der Schnur (8) mittels einer Harpune (14), die im Wesentlichen rechtwinklig in seitlicher Richtung aus dieser Nadel herausragt (12), unter der Nadel (12) vorbeiführt und, sobald die Schnur (8) eingehakt ist, zurückgezogen wird, während die Schnur mittels eines Verschlusses (16) befestigt wird.

15. Verfahren nach Anspruch 14, in dem, wenn der Schnitt (18) in die letzte Knotenschlaufe ausgeführt wurde, diese Spule (6) bewegt wird und durch eine neue zu umwickelnde Spule ersetzt wird, und die Schnur (8), die von der Harpune (14) mittels des Verschlusses (16) befestigt wurde, automatisch weggezogen und vom selbst-festziehenden Knoten entfernt wird.

16. Verfahren nach einem der Ansprüche 2 bis 13, in dem dieser Schnitt (18) in die letzte Knotenschlaufe eingebracht wird mittels eines Drahts, der durch fließenden elektrischen Strom zum Glühen gebracht wird.

17. Verfahren nach einem der Ansprüche 2 bis 13, in dem in den Schritten, in denen die Nadel (12) in einer radialen Bewegung zur Innenseite der Spule hinbewegt wird, Schnurrückholmittel in diesem Zuführmittel (10) veranlasst werden, einzugreifen, um die Schnur (8) auf der Nadel (12) straff zu halten und in den Schritten, in denen die Nadel (12) in einer radialen Bewegung zur Außenseite der Spule hinbewegt wird, Schnurtrennmittel veranlasst werden, einzugreifen, um die Zufuhr von Schnur aus dem Schnurzuführmittel zu begrenzen (10).

18. Vorrichtung zur automatischen Fädelung und Verknotung unter Verwendung einer Schnur (8), einer im Allgemeinen ringförmigen Spule (6) einer dynamoelektrischen Maschine, wobei diese Vorrichtung ein Schnurzuführmittel (10), Mittel zur Führung einer Fädelnadel (12), die einen hakenförmigen Vorsprung aufweisen, wobei das Führungsmittel die Nadel um ihre Achse (C) drehen und sie radial (A) und axial (B) im Verhältnis zur Spule (6) bewegen kann, um die Schnur (8) in Eingriff zu nehmen und sie radial zu ziehen, um ineinander gefädelte Fädelschlaufen zu bilden, die die Spule (6) umwickeln, Mittel zum Abschneiden der Schnur nach ihrer Verknotung und Mittel zur Drehung dieser Spule um ihre Achse in Abstimmung mit der Bewegung der Nadel (12) aufweist, wobei die Nadelführungsmittel nach Beendigung der Fädelphase so bedient werden können, dass sie eine Vielzahl von Knotenschlaufen (30, 33, 35, 31; 39, 44) am Fädelendstück bilden, indem sie die Schnur jedes Mal durch eine zuvor gebildete Knotenschlaufe (30, 33, 35; 39) hindurchführen bzw. durch eine zuletzt gebildete Fädelschlaufe (28; 34), wenn eine erste Knotenschlaufe (30; 39) gebildet wird, **dadurch gekennzeichnet, dass** diese Nadelführungsmittel so angeordnet sind, dass sie während der Bildung jeder Knotenschlaufe (30, 33, 35; 39, 44) die Schnur (8) so fest anziehen, dass die zuletzt gebildete Fädelschlaufe (28; 34) bzw. jede Knotenschlaufe (30, 33, 35; 39), die der letzten Knotenschlaufe (31; 44) vorhergeht, einzeln auf der sich bildenden Knotenschlaufe (30, 33, 35, 31; 39, 44) festgezogen werden, wobei sich eine Kette von Verknotungen (20; 38, 42) bildet, und man einen selbst-festziehenden Knoten (32) erhält, und in dem die Schneidmittel so angebracht sind, um die letzte Knotenschlaufe (31; 44) an einer Stelle durchzuschneiden, die neben dem Knoten (32) liegt.

## Revendications

1. Procédé de formation de noeud d'un bout de laçage d'extrémité d'un fil (8) utilisé pour enroulement d'un bobinage globalement toroïdal (6) d'une machine dynamoélectrique, au moyen d'un dispositif de laçage du type comprenant un moyen d'alimentation en fil (10), une aiguille de laçage (12) comportant une extrémité en forme de crochet et pouvant tourner autour de son axe (C) de même que se déplacer radialement (A) et axialement (B) par rapport audit bobinage (6) pour engager ledit fil (8) et le tirer radialement afin de former des anneaux de laçage entrelacés s'enroulant autour dudit bobinage (6), et un moyen pour faire tourner ledit bobinage (6) autour de son axe, de manière synchrone avec le déplacement de ladite aiguille (12), le procédé comprenant les étapes, dans lesquelles :
on forme, à la fin d'une phase de laçage, plusieurs anneaux de formation de noeud liés (30, 33, 35, 31 ; 39, 44) sur ledit bout de laçage d'extrémité, en faisant passer le fil à chaque fois, respectivement, à travers un anneau de formation de noeud formé au préalable (30, 33, 35 ; 39), ou à travers l'anneau de laçage formé en dernier (28 ; 34), lors de la formation d'un premier anneau de formation de noeud (30 ; 39) ; et
on coupe le dernier anneau de formation de noeud (31 ; 44) de ladite pluralité d'anneaux ;
et **caractérisé en ce que**, pendant la formation de chaque anneau de formation de noeud (30, 33, 35 ; 39, 44), le fil (8) est tiré dans une mesure faisant que ledit anneau de laçage formé en dernier (28 ; 34) et, respectivement, chaque anneau de formation de noeud (30, 33, 35 ; 39) précédant un dernier anneau de formation de noeud (31 ; 44) se ferment individuellement sur l'anneau de formation de noeud (30, 33, 35, 31 ; 39, 44) qui est formé, ce par quoi l'on obtient une chaîne de prises de noeud (20 ; 38, 42) formant un noeud autobloquant (32), le dernier anneau de formation de noeud étant coupé à une position (18) adjacente au noeud (32).

2. Procédé selon la revendication 1, dans lequel lesdits anneaux de formation de noeud (30, 33, 35, 31) sont formés par les étapes, dans lesquelles :
a1) à la fin de la phase de laçage au moyen d'un dernier déplacement radial de l'aiguille (12) de l'intérieur de la bobine (6) vers l'extérieur pour former ledit dernier anneau de laçage (28), on sépare le synchronisme entre le déplacement de rotation du bobinage et le déplacement de l'aiguille, et l'on arrête la rotation dudit bobinage ;
b1) on entraîne l'aiguille (12) suivant un premier déplacement radial en direction de l'intérieur du bobinage (6), le long d'un trajet équivalent à un trajet d'aiguille pendant ledit dernier déplacement radial, mais dans une direction opposée ;
c1) on accroche ledit fil (8), fourni par ledit moyen d'alimentation en fil(10), au moyen de l'extrémité en forme de crochet de ladite aiguille (12) ;
d1) on entraîne l'aiguille (12) avec le fil (8) engagé dans son extrémité en forme de crochet suivant un premier déplacement radial en direction de l'extérieur dudit bobinage (6), le- long d'un trajet équivalent au trajet d'aiguille pendant ledit premier déplacement radial en direction de l'intérieur, mais dans une direction opposée, on tire le fil (8) dans ledit dernier anneau de laçage (28), en l'amenant à se fermer en une première prise de noeud (20) et à former le premier anneau de formation de noeud (30) ;
e1) on entraînement l'aiguille (12) suivant un second déplacement radial en direction de l'intérieur du bobinage, le long d'un trajet équivalent au trajet d'aiguille pendant ledit dernier déplacement radial, mais dans une direction opposée ;
f1) on accroche le fil (8), fourni par ledit moyen d'alimentation en fil (10), au moyen de l'extrémité en forme de crochet de ladite aiguille (12) ;
g1) on entraîne l'aiguille (12), le fil (8) étant engagé dans son extrémité en forme de crochet, suivant un deuxième déplacement radial en direction de l'extérieur du bobinage, le long d'un trajet équivalent au trajet d'aiguille pendant ledit deuxième déplacement radial en direction de l'intérieur, mais dans une direction opposée, on tire le fil (8) dans ledit premier anneau de formation de noeud (30), en l'amenant à se fermer en une deuxième prise de noeud et à former un deuxième anneau de formation de noeud ;
h1) on exécute une coupe (18) dans le dernier anneau de formation de noeud et l'on tire le fil pour extraire l'extrémité libre (8'), en obtenant, par conséquent, un noeud autobloquant (32).

3. Procédé selon la revendication 2, dans lequel, avant d'exécuter la coupe dans ledit deuxième anneau de formation de noeud, on effectue les étapes suivantes, dans lesquelles :
i1) on entraîne l'aiguille (12) suivant un troisième déplacement radial en direction de l'intérieur du bobinage, le long d'un trajet équivalent à un trajet d'aiguille pendant ledit dernier déplacement radial, mais dans une direction opposée ;
j1) on accroche ledit fil (8), fourni par ledit moyen d'alimentation en fil(10), au moyen de l'extrémité en forme de crochet de ladite aiguille (12) ;
kl) on entraîne l'aiguille (12), le fil (8) étant engagé dans son extrémité en forme de crochet, suivant un troisième déplacement radial en direction de l'extérieur du bobinage, le long d'un trajet équivalent au trajet d'aiguille pendant ledit troisième déplacement radial en direction de l'intérieur, mais dans une direction opposée, on tire le fil (8) dans ledit deuxième anneau de formation de noeud, en l'amenant à se fermer en une troisième prise de noeud, et à former un troisième anneau de formation de noeud.

4. Procédé selon la revendication 2, dans lequel, avant d'exécuter la coupe dans ledit deuxième anneau de formation de noeud, on effectue de façon répétée les étapes e1), f1) et g1) afin de former une chaîne ayant une longueur souhaitée.

5. Procédé selon l'une quelconque des revendications 2 à 4, dans lequel l'aiguille (12), après avoir accroché le fil (8), effectue une rotation d'environ 180° autour de son axe, pendant le déplacement radial en direction de l'extérieur du bobinage, en tournant vers le bas son extrémité en forme de crochet.

6. Procédé selon la revendication 5, dans lequel l'aiguille (12), après avoir effectué un déplacement radial en direction de l'extérieur du bobinage, effectue une rotation d'environ 180° autour de son axe retournant vers le haut son extrémité en forme de crochet.

7. Procédé selon la revendication 5, dans lequel l'aiguille (12) après avoir effectué un déplacement radial en direction de l'extérieur du bobinage, effectue un premier déplacement axial vers le bas, une rotation d'environ 180° autour de son axe, en retournant son extrémité en forme de crochet, et un second déplacement axial vers le bas dans une direction opposée audit premier déplacement axial.

8. Procédé selon la revendication 1, dans lequel lesdits anneaux de formation de noeud (39, 44) sont formés par les étapes, dans lesquelles :
a2) à la fin de la phase de laçage au moyen d'un dernier déplacement radial de l'aiguille (12) de l'intérieur du bobinage (6) en direction de l'extérieur pour former ledit dernier anneau de laçage (34), on sépare le synchronisme entre le mouvement en rotation du bobinage et le déplacement de l'aiguille, et l'on arrête la rotation dudit bobinage ;
b2) on entraîne l'aiguille (12) suivant une première rotation autour de son propre axe pour former une première torsion (36) dans ledit dernier anneau de laçage (34) et obtenir un dernier anneau de laçage torsadé (34) ;
c2) on entraîne l'aiguille (12) suivant un premier déplacement radial en direction de l'intérieur du bobinage (6), le long d'un trajet équivalent au trajet d'aiguille pendant ledit dernier déplacement radial, mais dans une direction opposée ;
d2) on accroche le fil (8), fourni par ledit moyen d'alimentation en fil (10), au moyen de l'extrémité en forme de crochet de ladite aiguille (12) ;
e2) on entraîne l'aiguille (12), le fil (8) étant engagé dans son extrémité en forme de crochet, suivant un premier déplacement radial en direction de l'extérieur du bobinage (6), le long d'un trajet équivalent au trajet d'aiguille pendant ledit premier déplacement radial en direction de l'intérieur, mais dans une direction opposée, on tire le fil (8) dans ledit dernier anneau de laçage torsadé (34), en l'amenant à se fermer en une première prise de noeud (38) et à former un premier anneau de formation de noeud (39) ;
f2) on exécute une coupe (18) dans le dernier anneau de formation de noeud et l'on tire le fil pour extraire l'extrémité libre (8'), en obtenant, par conséquent, un noeud autobloquant.

9. Procédé selon la revendication 8, dans lequel, avant d'exécuter la coupe dans le dernier anneau de formation de noeud, on effectue les étapes suivantes, dans lesquelles :
g2) on entraîne l'aiguille (12) suivant une deuxième rotation autour de son propre axe pour former une seconde torsion (40) dans ledit premier anneau de formation de noeud (39) et obtenir un premier anneau de formation de noeud torsadé (39) ;
h2) on entraîne l'aiguille (12) suivant un deuxième déplacement radial en direction de l'intérieur du bobinage, le long d'un trajet équivalent au trajet d'aiguille pendant ledit dernier déplacement radial, mais dans une direction opposée ;
i2) on accroche le fil (8), fourni par ledit moyen d'alimentation en fil (10), au moyen de l'extrémité en forme de crochet de ladite aiguille (12) ;
j2) on entraîne l'aiguille (12), le fil (8) étant engagé dans son extrémité en forme de crochet, suivant un troisième déplacement radial en direction de l'extérieur du bobinage, le long d'un trajet équivalent au trajet d'aiguille pendant ledit deuxième déplacement radial en direction de l'intérieur, mais dans une direction opposée, on tire le fil (8) dans ledit premier anneau de formation de noeud torsadé (39), en l'amenant à se fermer en une deuxième prise de noeud (42) et à former un deuxième anneau de formation de noeud (44).

10. Procédé selon la revendication 9, dans lequel ladite première rotation est effectuée dans une direction opposée à la direction de ladite deuxième rotation.

11. Procédé selon la revendication 9, dans lequel lesdites première et deuxième rotations sont des rotations effectuées sur environ 540°.

12. Procédé selon la revendication 8, dans lequel, avant d'exécuter la coupe dans le dernier anneau de formation de noeud, on effectue, de façon répétée, les étapes b2), c2), d2) et e2) afin de former une chaîne d'anneaux torsadés ayant une longueur souhaitée.

13. Procédé selon l'une quelconque des revendications 8 à 12, dans lequel l'aiguille (12), après avoir effectué l'un desdits déplacements radiaux en direction de l'extérieur du bobinage, effectue un premier déplacement axial vers le bas et, après une rotation autour de son axe, effectue un deuxième déplacement axial vers le haut, en venant dans la position supérieure.

14. Procédé selon l'une quelconque des revendications 2 à 13, dans lequel, avant d'exécuter la coupe dans ledit dernier anneau de formation de noeud, on effectue les étapes suivantes, dans lesquelles :
l) on entraîne l'aiguille (12) suivant un premier déplacement radial en direction de l'intérieur du bobinage, en la faisant passer à travers le dernier anneau de formation de noeud ;
m) on accroche le fil (8) au moyen d'un harpon (14) qui provient de ladite direction latérale sensiblement perpendiculaire à ladite aiguille (12), on le fait passer sous l'aiguille (12) et, une fois accroché au fil (8), on le retire tout en bloquant le fil au moyen d'un dispositif de blocage (16).

15. Procédé selon la revendication 14, dans lequel, lorsque l'on a effectué la coupe (18) dans le dernier anneau de formation de noeud, on déplace ledit bobinage (6) et on le remplace par un nouveau bobinage à lacer, et le fil (8), bloqué par le harpon (14) au moyen du dispositif de blocage (16) est tiré automatiquement et extrait du noeud autobloquant.

16. Procédé selon l'une quelconque des revendications 2 à 13, dans lequel on effectue ladite coupe (18) dans le dernier anneau de formation de noeud au moyen d'un fil amené à l'incandescence par le passage d'un courant électrique.

17. Procédé selon l'une quelconque des revendications 2 à 13, dans lequel, pendant les étapes dans lesquelles on entraîne l'aiguille (12) suivant un déplacement radial en direction de l'intérieur du bobinage, on fait intervenir un moyen de récupération de fil dans ledit moyen d'alimentation (10) pour maintenir la tension du fil (8) sur l'aiguille (12) et, pendant les étapes dans lesquelles on entraîne l'aiguille (12) suivant un déplacement radial en direction de l'extérieur du bobinage, on fait intervenir un moyen de freinage de fil pour limiter la délivrance de fil à partir dudit moyen d'alimentation (10).

18. Dispositif de laçage et de formation de noeud automatique, au moyen d'un fil (8), d'un bobinage globalement toroïdal (6) d'une machine dynamoélectrique, ledit dispositif comprenant un moyen d'alimentation en fil (10), des moyens destinés à entraîner une aiguille de laçage (12) comportant une extrémité en forme de crochet, lesdits moyens d'entraînement étant capables de faire tourner ladite aiguille autour de son propre axe (C) et de la déplacer radialement (A) et axialement (B) par rapport audit bobinage (6), dans le but d'engager ledit fil (8) et de le tirer radialement afin de former des anneaux de laçage entrelacés s'enroulant autour dudit bobinage (6), des moyens servant à couper le fil après sa formation de noeud, et un moyen destiné à faire tourner ledit bobinage autour de son axe en synchronisme avec le déplacement de ladite aiguille (12), lesdits moyens d'entraînement d'aiguille pouvant opérer, à la fin d'une phase de laçage, pour former plusieurs anneaux de formation de noeud (30, 33, 35, 31 ; 39, 44) sur ledit bout de laçage d'extrémité, en faisant passer à chaque fois, respectivement, le fil à travers un anneau de formation de noeud formé au préalable (30, 33, 35 ; 39) ou à travers un anneau de laçage formé en dernier (28 ; 34), lors de la formation d'un premier anneau de formation de noeud (30 ; 39), **caractérisé en ce que** lesdits moyens d'entraînement d'aiguille sont agencés pour tirer le fil (8), pendant la formation de chaque anneau de formation de noeud (30, 33, 35 ; 39, 44), dans une mesure faisant que ledit anneau de laçage formé en dernier (28 ; 34) et, respectivement, chaque anneau de formation de noeud (30, 33, 35 ; 39) précédant un dernier anneau de formation de noeud (31 ; 44) se ferment individuellement sur l'anneau de formation de noeud (30, 33, 35, 31 ; 39, 44) qui est formé, ce par quoi l'on obtient une chaîne de prises de noeud (20, 38, 42) formant un noeud autobloquant (32), et **en ce que** les moyens de coupe sont agencés pour couper le dernier anneau de formation de noeud (31 ; 44) à une position adjacente au noeud (32).
